Europäisches Patentamt

European Patent Office

Office européen des brevets

(19)

(11) Veröffentlichungsnummer: **0 347 485 B1**

# (12) EUROPÄISCHE PATENTSCHRIFT

(45) Veröffentlichungstag der Patentschrift: **04.12.91**

(21) Anmeldenummer: **88110085.3**

(22) Anmeldetag: **24.06.88**

(51) Int. Cl.5: **B60R 13/07**, B60J 1/20, B62D 25/04

(54) **Einrichtung an Fahrzeugen zur Abführung von Wasser.**

(43) Veröffentlichungstag der Anmeldung:
**27.12.89 Patentblatt 89/52**

(45) Bekanntmachung des Hinweises auf die
Patenterteilung:
**04.12.91 Patentblatt 91/49**

(84) Benannte Vertragsstaaten:
**DE ES FR GB IT**

(56) Entgegenhaltungen:
DE-A- 2 318 097          DE-A- 2 458 780
DE-A- 3 119 358          DE-A- 3 121 093
FR-A- 2 369 111          GB-A- 687 053

(73) Patentinhaber: **AUDI AG**
**Auto-Union-Strasse 1 Postfach 220**
**W-8070 Ingolstadt(DE)**

(72) Erfinder: **Piech, Ferdinand, Dr.**
**Gerolfingerstrasse 128**
**W-8070 Ingolstadt(DE)**

(74) Vertreter: **Engelhardt, Harald**
**AUDI AG Patentabteilung Postfach 220**
**W-8070 Ingolstadt(DE)**

Rank Xerox (UK) Business Services

**Beschreibung**

Die Erfindung bezieht sich auf eine Wasserfangeinrichtung für Fahrzeuge gemäß den Oberbegriffen der Ansprüche 1 und 3.

Aus der DE-A 3 048 889 ist eine Wasserfangeinrichtung für Fahrzeuge bekannt, welche in einem Hohlprofil aufgenommen ist. Die Wasserfangleiste dieser Wasserfangeinrichtung ist an ein elastisches Material enthaltendes Profilteil angeformt, welches einen Hohlraum aufweist, der in Abhängigkeit vom Ein- bzw. Ausschalten der Scheibenwischer mit unterschiedlichem Druck beaufschlagt wird, derart, daß bei ausgeschaltetem Scheibenwischer eine den äußeren Schenkel der Wasserfangleiste in Anlage an die Windschutzscheibe bringende Verformung des Profilteiles auftritt. Dieses Profilteil ist an einer vorderen Dachsäule untergebracht, wozu diese mit einer entsprechenden rinnenförmigen Vertiefung versehen ist.

Aus der DE-A 3 346 986 ist es bekannt, die tragende Struktur eines Fahrzeuges durch Leichtmetall-Strangpreßprofile zu bilden, welche durch Gußknoten miteinander verbunden sind.

Der Erfindung liegt die Aufgabe zugrunde, die bekannte Wasserfangeinrichtung mit einfachen Mitteln zum Einsatz in Fahrzeugen, deren vordere Dachsäulen und/oder seitliche Dachholme durch Strangpreßprofile gebildet sind, weiterzubilden.

Diese Aufgabe wird durch die Merkmale des Anspruchs 1 gelöst.

Dadurch, daß das Hohlprofil durch ein Strangpreßteil aus Leichtmetall hergestellt ist, lassen sich ohne Mehraufwand für die Ausbildung der Wasserfangeinrichtung notwendige Funktionen in dem Strangpreßteil integrieren. Eine der Funktionen ist die Aufnahme und Halterung der Wasserfangleiste. Für diesen Zweck optimale Querschnitte, insbesondere auch solche mit mehreren Hinterschneidungen, lassen sich beim Strangpressen ohne Probleme erzeugen. Die bekannten, eine Wasserfangeinrichtung aufnehmenden Bauteile sind aus dünnen Blechen zusammengesetzte Profile. Deren Herstellverfahren bestimmt weitestgehend die realisierbaren Querschnitte. Dadurch ist es notwendig, daß sich die Wasserfangeinrichtung an diesen Gegebenheiten orientiert. Beim Gegenstand der Erfindung kann die Wasserfangeinrichtung hingegen optimal entsprechend ihrer Aufgabe ausgebildet werden, ohne daß Probleme in Zusammenhang mit dem sie aufnehmenden Karosseriebauteil auftreten.

Zur Befestigung der Wasserfangeinrichtung weist das Hohlprofil eine oder mehrere rinnenförmige Profilierungen auf, welche ein entsprechend ausgebildetes Halteteil der Wasserfangeinrichtung formschlüssig umgreifen. Diese Profilierungen lassen sich bei dem vorgeschlagenen Strangpreßteil aus Leichtmetall besonders einfach herstellen.

Durch eine solche rinnenförmige Profilierung ist es möglich, die Wasserfangeinrichtung nur durch Einclipsen an dem Strangpreßteil zu befestigen. Weitere Maßnahmen, z. B. eine Klebung, sind - gegenüber der bekannten Befestigungsart solcher Einrichtungen - entbehrlich.

Durch die Ausbildung des die Wasserfangeinrichtung aufnehmenden Bauteils als Strangpreßteil ist nicht nur eine verbesserte Befestigung für die Wasserfangeinrichtung gegeben. Es ist vielmehr auch möglich, weitere Funktionen in das Strangpreßteil mit einzubeziehen. Bei der vorgeschlagenen Wasserfangeinrichtung übernimmt das Hohlprofil die Aufgabe einer Versorgungsleitung, indem es der Wasserfangeinrichtung Unterdruck bzw. Druck zum Bewegen der Wasserfangleiste zuführt. Die bekannten, aus Blechen zusammengesetzten Hohlprofile sind dafür nicht geeignet, da die Verbindungen zwischen den Blechen nicht dicht sind.

Die Wasserfangeinrichtung umfaßt in an sich bekannter Weise einen Abschnitt aus weichelastischem Material, welcher einen Hohlraum begrenzt. Durch Beaufschlagung des Hohlraumes mit Unterdruck/Druck ist eine Kontraktion bzw. Expansion des Abschnitts der Wasserfangeinrichtung erzeugbar, wodurch eine mit dem Abschnitt in Verbindung stehende Wasserfangleiste in ihre Wirkstellung bzw. in ihre gegenüber der Außenkontur des Fahrzeuges nicht vorstehende Ruhestellung gelangt. Bei der vorgeschlagenen Wasserfangeinrichtung ist das Hohlprofil über eine Öffnung mit dem Hohlraum der Wasserfangeinrichtung verbunden, so daß in einfacher Weise die Versorgung des Hohlraums über das Hohlprofil gewährleistet ist.

Der Anspruch 2 kennzeichnet eine vorteilhafte Ausgestaltung der Verbindung zwischen Hohlprofil und Hohlraum.

Die der Erfindung zugrunde liegende Aufgabe kann auch durch die Merkmale des Anspruchs 3 gelöst werden.

Auch hier ist das Hohlprofil durch ein Strangpreßteil aus Leichtmetall gebildet. Die Wasserfangeinrichtung weist einen Hohlraum auf, in dem ein mit der Wasserfangleiste verbundener, bewegbarer Abschnitt angeordnet ist. Dieser Abschnitt ist kolbenartig in dem Hohlraum geführt, wobei der Abschnitt den Hohlraum unterteilt und die Verschiebung durch Beaufschlagung einer Seite des Hohlraumes mit Unterdruck/Druck erfolgt. Da Strangpreßteile im Gegensatz zu zusammengesetzten Blechprofilen mit einer hohen Präzision gefertigt werden können, ist es ohne weiteres auch möglich, daß Wände des im Strangpreßverfahren hergestellten Hohlprofiles Führungsaufgaben beim Bewegen des mit der Wasserfangleiste verbundenen Abschnitts der Wasserfangeinrichtung übernehmen.

Da die Beaufschlagung mit Druck bzw. Unterdruck auf nur einer Seite des den Hohlraum unterteilenden Abschnitts der Wasserfangeinrichtung notwendig ist, kann in weiterer Ausgestaltung zur Ausübung einer Rückstellkraft zwischen dem Abschnitt und einer gegenüberliegenden Wand des Hohlraumes eine Feder angeordnet sein.

Vorteilhaft ist, wenn die Wasserfangleiste winkelförmig ausgebildet ist und der äußere Schenkel des Winkels flächenbündig in einem Rücksprung im Hohlprofil aufgenommen ist, wenn sich die Wasserfangleiste in ihrer Ruhestellung befindet. Durch den Rücksprung läßt sich eine flächenbündige Anordnung der Wasserfangleiste in der Ruhestellung erreichen. Ein solcher Rücksprung kann bei bekannten Hohlprofilen aus Blech nicht oder nur mit sehr hohem Aufwand und anderen Zugeständnissen realisieren.

Die beiden Ausführungsbeispiele der Erfindung sind in den Zeichnungen dargestellt.

Es zeigt

Fig. 1 die Karosserie eines Personenkraftwagens im Bereich des Fahrgastraumes,

Fig. 2 den Schnitt II-II aus Fig. 1,

Fig. 3 den Schnitt III-III aus Fig. 1.

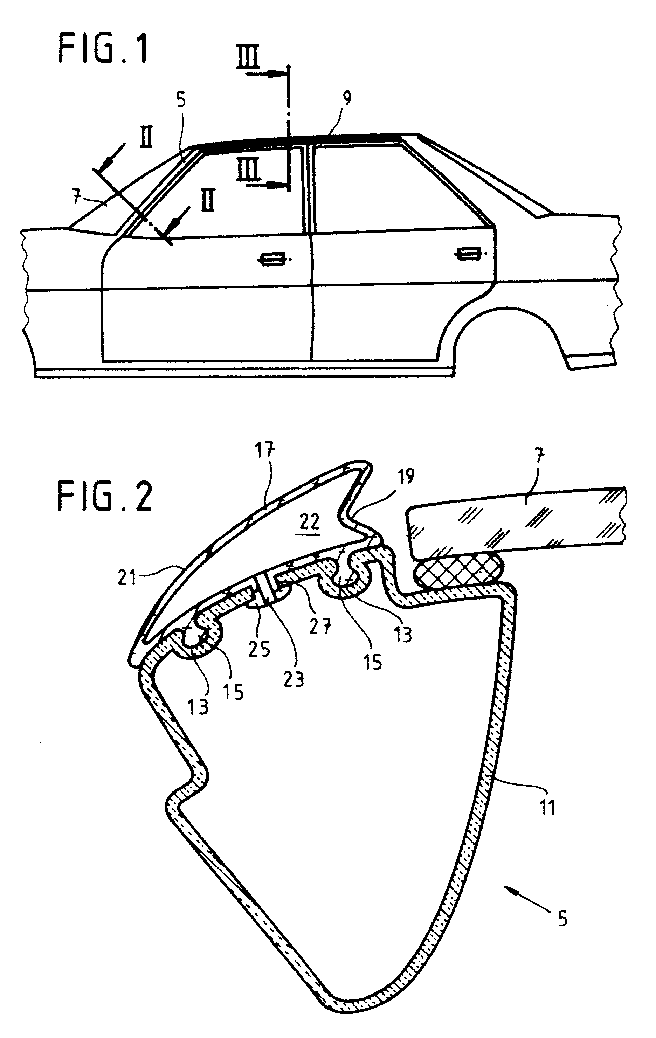

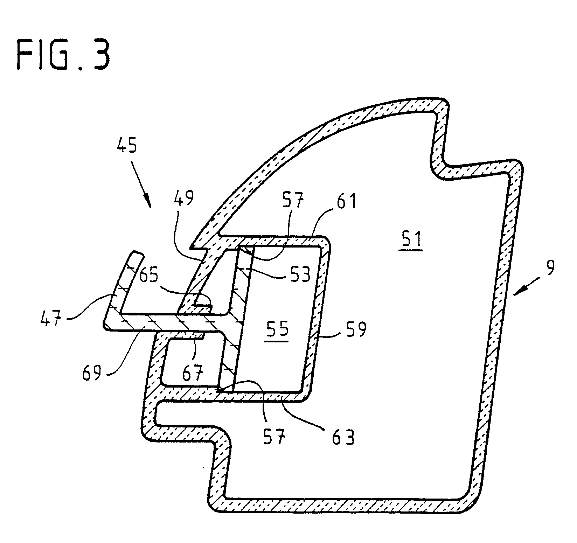

Eine in Fig. 1 abschnittsweise dargestellte Fahrzeugkarosserie umfaßt zwei vordere Dachsäulen 5, welche eine Windschutzscheibe 7 seitlich begrenzen. Im oberen Bereich der vorderen Dachsäulen 5 schließen sich nach hinten Dachholme 9 an. Sowohl die vorderen Dachsäulen 5, als auch die Dachholme 9 sind mit Wasserfangeinrichtungen versehen, die in der Figuren 2 und 3 näher dargestellt sind.

Die in Fig. 2 im Schnitt dargestellte vordere Dachsäule 5 ist ein geschlossenes Hohlprofil 11, welches aus Leichtmetall besteht und im Strangpreßverfahren hergestellt ist. Das Hohlprofil 11 weist - in bezug auf seine Anordnung im Fahrzeug - an seiner Außenseite zwei rinnenförmige Profilierungen 13 auf, welche die Halteteile 15 einer Wasserfangleiste 17 formschlüssig umgreifen. Die Montage der Wasserfangleiste 17, welche aus weichelastischem Material hergestellt ist, erfolgt nur durch Eindrücken der Halteteile 15 in die rinnenförmigen Profilierungen 13 des Hohlprofils 11. Wie aus Fig. 2 unmittelbar ersichtlich ist, weist die Wasserfangleiste 17 einen keilförmigen Querschnitt auf, dessen kurze Seite eine Falte 19 bildet. Die Falte 19 ermöglicht es, daß die Wasserfangleiste 17 von der in Fig. 2 dargestellten Wirkstellung, in der sie von der Windschutzscheibe 7 ankommendes Wasser abführt, durch Kontraktion in eine Ruhestellung bewegbar ist, in der sich ihre Außenfläche 21 etwa bündig an die äußere Kontur der Windschutzscheibe 7 anschließt.

Die Kontraktion der Wasserfangleiste 17 wird durch Anlegen eines Unterdrucks bewirkt. Wenn der Unterdruck nicht vorliegt, nimmt die Wasserfangleiste 17 durch Eigenelastizität die in Fig. 2 gezeigte Stellung ein. Zur Beaufschlagung des von der Wasserfangleiste 17 umschlossenen Hohlraums 22 mit Unterdruck steht diese über eine Öffnung 23 mit dem Querschnitt des Hohlprofils 11 in Verbindung. Die Öffnung 23 ist in einem einstückig an die Wasserfangleiste 17 angeformten Ansatz 25 ausgebildet, welcher dichtend in einer Bohrung 27 des Hohlprofils 11 aufgenommen ist.

Das Hohlprofil 11 bildet nicht nur die vordere Dachsäule 5, sondern gleichzeitig eine Leitung zum Versorgen der Wasserfangleiste 17 mit Unterdruck. Es versteht sich von selbst, daß das Hohlprofil im übrigen luftdicht abgeschlossen sein muß und an einer Stelle ein Unterdruckanschluß notwendig ist. Auf die Darstellung dieser Merkmale wurde deshalb verzichtet.

Fig. 3 zeigt eine Wasserfangeinrichtung 45, welche an einem Dachholm 9 ausgebildet ist. Die Wasserfangeinrichtung 45 umfaßt eine winkelförmig ausgebildete Wasserfangleiste 47, welche bis zu einem Rücksprung 49 in dem den Dachholm 9 bildenden Hohlprofil 51 bewegbar ist, so daß in dieser Stellung die Wasserfangleiste 47 flächenbündig mit der Außenkontur des Dachholmes 9 abschließt.

Um eine Verschiebung der Wasserfangleiste 47 zu ermöglichen, ist an diese etwa im rechten Winkel ein Abschnitt 53 angeformt, welcher in einem Hohlraum 55 des Hohlprofils 51 längsverschieblich geführt ist. Wie aus der Zeichnung ersichtlich, unterteilt der Abschnitt 53 den Hohlraum 55 in zwei Räume. Wird nun im rechten Raum ein Unterdruck angelegt, dann bewegt sich die Wasserfangleiste 47 nach rechts und gelangt dadurch in ihre nicht aktive Stellung. Umgekehrt verhält es sich, wenn in dem linken Raum ein Unterdruck angelegt wird. In diesem Fall wird die Wasserfangleiste 47 gegenüber dem Dachholm 9 nach außen bewegt, so daß sie über den Dachholm 9 abfließendes Wasser aufnehmen und ableiten kann. Analog dazu kann auch mit überdruck bzw. mit über- und Unterdruck gearbeitet werden. Es ist gleichfalls möglich, nur einen der Räume druckmäßig zu beeinflussen und die Rückstellung über eine Feder (nicht gezeigt) zu bewirken, deren Enden sich am Abschnitt 53 und einer gegenüberliegenden Wand 59 des Hohlraums 55 abstützen.

Die Verschiebebewegung des Abschnitts 53 der Wasserfangleiste 47 ist durch Anschläge 57 bzw. durch eine diesen gegenüberliegende Wand 59 des Hohlprofiles begrenzt. Die Führung des Abschnitts 53 wird zum einen durch die Wände 61 und 63 des Hohlprofils gebildet und durch Ansätze 65 und 67 am Hohlprofil unterstützt, welche mit dem waagerechten Schenkel 69 der Wasserfangleiste 47 zusammenwirken. Um eine ausreichende Dichtheit zu gewährleisten kann zwischen den Ansätzen 65 und 67 und dem Schenkel 69 eine in der Zeichnung nicht dargestellte Dichtung vorgesehen sein.

Die Steuerung der Bewegung der vorstehend näher beschriebenen Wasserleisten ist nicht Gegenstand der Erfindung. Sie kann in an sich bekannter Weise in Abhängigkeit vom Ein- bzw. Ausschalten der Scheibenwischer erfolgen.

**Patentansprüche**

1. Wasserfangeinrichtung für Fahrzeuge mit folgenden Merkmalen:

   a) das die Wasserfangeinrichtung aufnehmende Bauteil ist ein Hohlprofil (11),
   b) zur Halterung der Wasserfangeinrichtung weist das Hohlprofil (11) eine rinnenförmige Profilierung (13) auf,
   c) die Profilierung (13) umgreift formschlüssig ein Halteteil (15) der Wasserfangeinrichtung,
   d) die Wasserfangeinrichtung umfaßt einen Abschnitt aus weichelastischem Material, welcher einen Hohlraum (22) begrenzt,
   e) durch Beaufschlagung des Hohlraumes mit Unterdruck/Druck ist eine Kontraktion bzw. Expansion des Abschnitts der Wasserfangeinrichtung erzeugbar, wodurch eine mit dem Abschnitt in Verbindung stehende Wasserfangleiste (17) in ihre Wirkstellung bzw. in ihre gegenüber der Außenkontur des Fahrzeuges nicht vorstehende Ruhestellung gelangt,

   dadurch gekennzeichnet,

   f) daß das Hohlprofil (11) durch ein Strangpreßteil aus Leichtmetall gebildet ist,
   g) daß der Unterdruck/Druck zum Bewegen der Wasserfangleiste (17) über das Hohlprofil (11) zugeführt wird und
   h) daß das Hohlprofil (11) über eine Öffung (23) mit dem Hohlraum (22) der Wasserfangeinrichtung in Verbindung steht.

2. Wasserfangeinrichtung nach Anspruch 1, dadurch gekennzeichnet, daß die Öffnung (23) in einem Ansatz (25) an dem den Hohlraum (22) aufweisenden Abschnitt der Wasserfangeinrichtung ausgebildet ist und der Ansatz (25) dichtend in einer Bohrung (27) des Hohlprofils (11) aufgenommen ist.

3. Wasserfangeinrichtung (45) für Fahrzeuge mit folgenden Merkmalen:

   a) das die Wasserfangeinrichtung (45) aufnehmende Bauteil ist ein Hohlprofil (51),

   b) in dem Hohlprofil (51) ist ein Bauteil mit einem Hohlraum (55) angeordnet,
   c) mit dem Hohlraum (55) wirkt ein bewegbarer Abschnitt (53) der Wasserfangeinrichtung (45) zusammen,
   d) durch Beaufschlagung des Hohlraumes (55) mit Unterdruck/Druck ist eine Bewegung des Abschnitts (53) erzeugbar, wodurch eine mit dem Abschnitt (53) in Verbindung stehende Wasserfangleiste (47) in ihre Wirkstellung bzw. in ihre gegenüber der Außenkontur des Fahrzeuges nicht vorstehende Ruhestellung gelangt,

   dadurch gekennzeichnet,

   e) daß das Hohlprofil (51) durch ein Strangpreßprofil aus Leichtmetall gebildet ist, und
   f) daß der bewegbare Abschnitt (53) kolbenartig in dem Hohlraum (55) geführt ist, wobei der Abschnitt (53) den Hohlraum (55) unterteilt und die Verschiebung durch Beaufschlagung des Hohlraumes (55) mit Unterdruck/Druck erfolgt.

4. Wasserfangeinrichtung nach Anspruch 3, dadurch gekennzeichnet, daß zwischen dem Abschnitt (53) und einer gegenüberliegenden Wand (59) des Hohlraums (55) eine Feder angeordnet ist.

5. Wasserfangeinrichtung nach einem der Ansprüche 3 oder 4, dadurch gekennzeichnet, daß die Wasserfangleiste (47) winkelförmig ausgebildet ist und der äußere Schenkel des Winkels flächenbündig in einem Rücksprung (49) im Hohlprofil (51) aufgenommen ist, wenn sich die Wasserfangleiste (47) in ihrer Ruhestellung befindet.

**Claims**

1. Water-catching device for vehicles with the following features:
   a) the component holding the water-catching device is a hollow profile member (11),
   b) the hollow profile member (11) has a groove-shaped profiling (13) for holding the water-catching device,
   c) the profiling (13) positively encompasses a retaining section (15) of the water-catching device,
   d) the water-catching device includes a section of flexible material which delimits a hollow space (22),
   e) contraction or expansion of the section of the water-catching device can be achieved by admitting suction/pressure to the hollow space, whereby a water-catching strip (17) connected to the section attains its operative position or its inoperative position in which it does not project beyond the external profile of the vehicle, characterized in that

f) the hollow profile member (11) is formed by an extruded section made of light metal,

g) the suction/pressure for moving the water-catching strip (17) is supplied via the hollow profile member (11), and

h) the hollow profile member (11) is connected to the hollow space (22) of the water-catching device via an opening (23).

2. Water-catching device according to Claim 1, characterized in that the opening (23) is formed in a projection (25) on the section of the water-catching device which has the hollow space (22) and the projection (25) is held in a hole (27) in the hollow profile member (11) in such a way as to form a seal.

3. Water-catching device (45) for vehicles with the following features:

a) the component holding the water-catching device (45) is a hollow profile member (51),

b) a component with a hollow space (55) is located in the hollow profile member (51),

c) a movable section (53) of the water-catching device (45) operates in conjunction with the hollow space (55),

d) a movement of the section (53) can be produced by admitting suction/pressure to the hollow space (55), whereby a water-catching strip (47) connected to the section (53) attains its operative position or its inoperative position in which it does not project beyond the external profile of the vehicle, characterized in that

e) the hollow profile member (51) is formed by an extruded section made of light metal, and

f) the movable section (53) is guided like a piston in the hollow space (55), in which the section (53) subdivides the hollow space (55) and the displacement takes place by admitting suction/pressure to the hollow space (55).

4. Water-catching device according to Claim 3, characterized in that a spring is positioned between the section (53) and an opposing wall (59) of the hollow space (55).

5. Water-catching device according to one of Claims 3 or 4, characterized in that the water-catching device (47) has an angular shape and the outside leg of the angle is held with flush surfaces in a recess (49) in the hollow profile member (51) when the water-catching strip (47) is in its inoperative position.

**Revendications**

1. Dispositif d'arrêt et d'évacuation de l'eau pour véhicules avec les caractéristiques suivantes :

a) l'élément recevant le dispositif d'arrêt et d'évacuation de l'eau est un profilé creux (11),

b) le profilé creux (11) présente un profil (13) en forme de gouttière pour la fixation d'un dispositif d'arrêt et d'évacuation de l'eau,

c) le profil (13) entoure étroitement un élément de retenue (15) du dispositif d'arrêt et d'évacuation de l'eau,

d) le dispositif d'arrêt et d'évacuation de l'eau comporte un segment en matière souple et élastique qui délimite un espace vide (22),

e) l'application d'une dépression ou d'une pression dans l'espace vide entraîne une contraction ou une dilatation du segment du dispositif d'arrêt et d'évacuation de l'eau, une baguette d'arrêt et d'évacuation de l'eau (17) reliée au segment se mettant alors dans sa position de fonctionnement ou dans sa position de repos dans laquelle elle ne dépasse pas du profil extérieur du véhicule,

caractérisé en ce que

f) le profilé creux (11) est constitué d'une pièce filée en métal léger,

g) la dépression ou la pression nécessaire au déplacement de la baguette d'arrêt et d'évacuation de l'eau (17) est amenée par l'intermédiaire du profilé creux (11), et

h) le profilé creux (11) est relié par l'intermédiaire d'une ouverture (23) à l'espace vide (22) du dispositif d'arrêt et d'évacuation de l'eau.

2. Dispositif d'arrêt et d'évacuation de l'eau suivant la revendication 1, caractérisé en ce que l'ouverture (23) est formée dans une saillie (25) du segment du dispositif d'arrêt et d'évacuation de l'eau qui comporte l'espace vide (22), et la saillie (25) est logée hermétiquement dans un trou (27) du profilé creux (11).

3. Dispositif d'arrêt et d'évacuation de l'eau (45) pour véhicules, avec les caractéristiques suivantes :

a) l'élément recevant le dispositif d'arrêt et d'évacuation de l'eau (45) est un profilé creux (51),

b) un élément comportant un évidement (55) est situé dans le profilé creux (51),

c) un segment mobile (53) du dispositif d'arrêt et d'évacuation de l'eau (45) coopère avec l'évidement (55),

d) l'application d'une dépression ou d'une pression à l'évidement (55) entraîne un déplacement du segment (53), une baguette d'arrêt et d'évacuation de l'eau (47) reliée au segment (53) se mettant alors dans sa position de fonctionnement ou dans sa position de repos dans laquelle elle ne dépasse pas du profil extérieur du véhicule,

caractérisé en ce que

e) le profil creux (51) est constitué d'un profilé filé en métal léger, et

f) le segment mobile (53) est guidé dans l'évidement (55) à la manière d'un piston, le segment (53) subdivisant l'évidement (55) et le déplacement résultant de l'application d'une dépression ou d'une pression à l'évidement (55).

4. Dispositif d'arrêt et d'évacuation de l'eau suivant la revendication 3, caractérisé en ce qu'un ressort est placé entre le segment (53) et une paroi opposée (59) de l'évidement (55).

5. Dispositif d'arrêt et d'évacuation de l'eau suivant l'une des revendications 3 ou 4, caractérisé en ce que la baguette d'arrêt et d'évacuation de l'eau (47) a une forme coudée et la branche extérieure du coude est logée dans un retrait (49) du profilé creux (51) à fleur de la surface lorsque la baguette d'arrêt et d'évacuation de l'eau (47) est dans sa position de repos.

FIG.1

FIG.2

# FIG.3